# EUROPEAN PATENT SPECIFICATION

(11) **EP 3 925 797 B1**
(45) Date of publication and mention of the grant of the patent: **12.07.2023**
(21) Application number: 21177234.8
(22) Date of filing: 01.06.2021
(51) Int. Cl.: B60C 11/03, B60C 11/13

(54) **TIRE**
REIFEN
PNEUMATIQUE

(30) Priority: 16.06.2020 JP 2020103860
(43) Date of publication of application: 22.12.2021
(73) Proprietor: Sumitomo Rubber Industries, Ltd., Kobe-shi, Hyogo-ken (JP)
(72) Inventor: NAKAJIMA, Koichi, Kobe-shi, Hyogo, 651-0072 (JP)
(74) Representative: Manitz Finsterwald Patent- und Rechtsanwaltspartnerschaft mbB

(56) References cited:
- EP-A1- 2 990 232
- EP-A1- 3 162 594
- DE-A1-102012 105 120
- DE-A1-102015 200 360
- JP-A- 2000 016 026
- KR-B1- 100 990 573
- US-A1- 2010 263 776
- US-A1- 2011 100 521

## Description

### BACKGROUND OF THE INVENTION

### Field of the Invention

The present invention relates to a tire.

### Description of the Background Art

Hitherto, a pneumatic tire having recesses provided on groove walls of main grooves provided on a tread portion thereof has been proposed (see, for example, JP 2019-026241 A, DE 10 2012 105 120 A1 or JP 2000-16026 A). Even when the tread portion is worn, the recesses ensure sufficient opening areas of the main grooves on the tread surface of the tread portion. Therefore, the pneumatic tire can suppress a decrease in wet performance due to wear of the tread portion.

Attention is also drawn to the disclosure of EP2990232 A1.

In recent years, a tire that exhibits excellent wet performance over a longer period of time has been demanded. Therefore, the above pneumatic tire has been required to be further improved in suppression of a decrease in the above wet performance.

The present invention has been made in view of the above-described circumstances, and a main object of the present invention is to reliably suppress a decrease in wet performance due to wear of a tread portion in a tire having a circumferential groove provided on the tread portion.

### SUMMARY OF THE INVENTION

The present invention is directed to a tire including a tread portion, wherein the tread portion has at least one circumferential groove continuously extending in a tire circumferential direction, the circumferential groove includes a first groove edge extending on a tread surface and a first groove wall extending inwardly in a tire radial direction from the first groove edge, the first groove wall includes a recess-projection wall portion in which recesses and projections are repeated in the tire circumferential direction on an inner side in the tire radial direction with respect to the first groove edge, the recess-projection wall portion includes a plurality of recesses arranged at equal intervals in the tire circumferential direction, and columnar portions formed between the adjacent recesses, each recess includes a first plane which is flat at a bottom thereof, and each columnar portion includes a second plane substantially parallel to the first plane.

In the tire according to the present invention, the first groove wall preferably includes a flat wall portion having an angle of 0 to 16° relative to a tire normal line passing through the first groove edge, on an outer side in the tire radial direction of the recess-projection wall portion.

In the tire according to the present invention, the first plane of each recess is preferably connected to a groove bottom surface of the circumferential groove.

In the tire according to the present invention, a maximum length in the tire radial direction of each recess is preferably 50% to 70% of a maximum depth of the circumferential groove.

In the tire according to the present invention, a maximum length in the tire circumferential direction of each recess is preferably 5 to 11 mm.

In the tire according to the present invention, a depth of each recess is preferably 1 to 3 mm.

In the tire according to the present invention, a maximum length in the tire circumferential direction of each columnar portion is preferably 5 to 11 mm.

In the tire according to the present invention, the circumferential groove includes a second groove edge extending on the tread surface and a second groove wall extending inwardly in the tire radial direction from the second groove edge, and the second groove wall includes a recess-projection wall portion in which recesses arranged at the same equal intervals and projections are repeated in the tire circumferential direction in a phase different from that of the recess-projection wall portion of the first groove wall on the inner side in the tire radial direction with respect to the second groove edge.

In the tire according to the present invention, preferably, each columnar portion includes side surfaces connected to both sides in the tire circumferential direction of the second plane, and each side surface has a flat shape extending parallel to a groove width direction of the circumferential groove.

In the tire according to the present invention, a corner portion between the second plane and each side surface of the columnar portion preferably has a radius of curvature of 0.5 mm or less.

In the tire according to the present invention, preferably, no lateral groove and no sipe that are open on the tread surface of the tread portion 2 communicate with the circumferential groove.

As a result of adopting the above configuration, the tire according to the present invention can exert sufficiently large frictional force during running on a wet road surface by the groove edges of the circumferential grooves even when the tread portion is worn, and further can reliably suppress a decrease in wet performance due to wear of the tread portion.

### BRIEF DESCRIPTION OF THE DRAWINGS

FIG. 1 is a transverse cross-sectional view of a tread portion of a tire according to an embodiment of the present invention;
FIG. 2 is an enlarged plan view of a circumferential groove in FIG. 1;
FIG. 3 is an enlarged perspective view of the circumferential groove in FIG. 1;
FIG. 4 is a cross-sectional view taken along a line A-A in FIG. 2;
FIG. 5 is an enlarged perspective view of the circumferential groove when the tread portion is worn;
FIG. 6 is a graph showing the relationship between an angle θ1 of a second plane and wet performance;
FIG. 7 is a cross-sectional view of a columnar portion taken along a tread surface; and
FIG. 8 is an enlarged perspective view of a circumferential groove of a comparative example.

### DESCRIPTION OF THE PREFERRED EMBODIMENTS

Hereinafter, an embodiment of the present invention will be described with reference to the drawings.

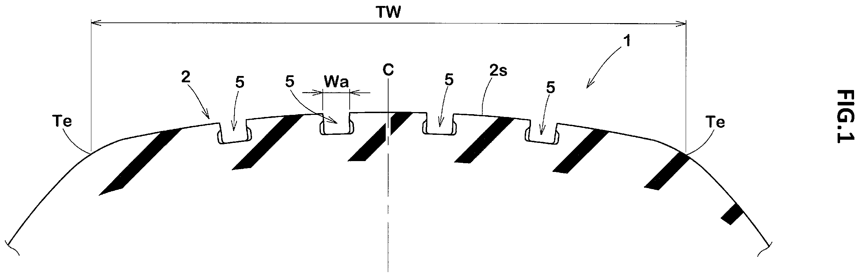

FIG. 1 shows a transverse cross-sectional view of a tread portion 2 of a tire 1 according to the present embodiment. FIG. 1 is a cross-sectional view, of the tire 1 in a normal state, including a tire rotation axis. The tire 1 according to the present embodiment is suitably used, for example, as a pneumatic tire for a passenger car. However, the present invention is not limited to such a mode, and the tire 1 according to the present invention may be used, for example, for a heavy-duty vehicle.

In the case of a pneumatic tire for which various standards are defined, the "normal state" is a state where the tire is fitted on a normal rim and inflated to a normal internal pressure and no load is applied to the tire. In the case of a non-pneumatic tire or a tire for which various standards are not defined, the normal state means a standard use state, corresponding to the purpose of use of the tire, where no load is applied to the tire. In the present description, unless otherwise specified, dimensions and the like of components of the tire are values measured in the normal state. It should be noted that each configuration described in the present description tolerates the usual errors contained in a rubber molded product.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tread portion 2 has at least one circumferential groove 5 continuously extending in the tire circumferential direction. The tread portion 2 of the present embodiment has, for example, four circumferential grooves 5. However, the present invention is not limited to such a mode.

In the present description, the groove longitudinal direction of each circumferential groove 5 means a direction parallel to a groove center line of the circumferential groove 5. In the present embodiment, the groove longitudinal direction is parallel to the tire circumferential direction. In addition, the groove width direction of each circumferential groove 5 means a direction orthogonal to the groove center line.

A groove width Wa of each circumferential groove 5 is, for example, preferably 3.0% to 6.0% of a tread width TW. The groove width Wa is the length between groove edges that appear on a tread surface (hereinafter, sometimes referred to as a tread surface 2s) of the tread portion 2. The tread width TW is the distance in the tire axial direction from one tread end Te to another tread end Te in the normal state. The groove depth of each circumferential groove 5 is, for example, preferably 5 to 10 mm in the case of a pneumatic tire for a passenger car.

Each tread end Te is a ground contact position on the outermost side in the tire axial direction when a normal load is applied to the tire 1 in the normal state and the tire 1 is brought into contact with a flat surface at a camber angle of 0°.

In the case of a pneumatic tire for which various standards are defined, the "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In addition, in the case of a non-pneumatic tire or a tire for which various standards are not defined, the "normal load" is a load applied to one tire in a standard use state of tires. The "standard use state" refers to a state where the tires are mounted on a standard vehicle corresponding to the purpose of use of the tires and the vehicle is stationary on a flat road surface in a state where the vehicle can run.

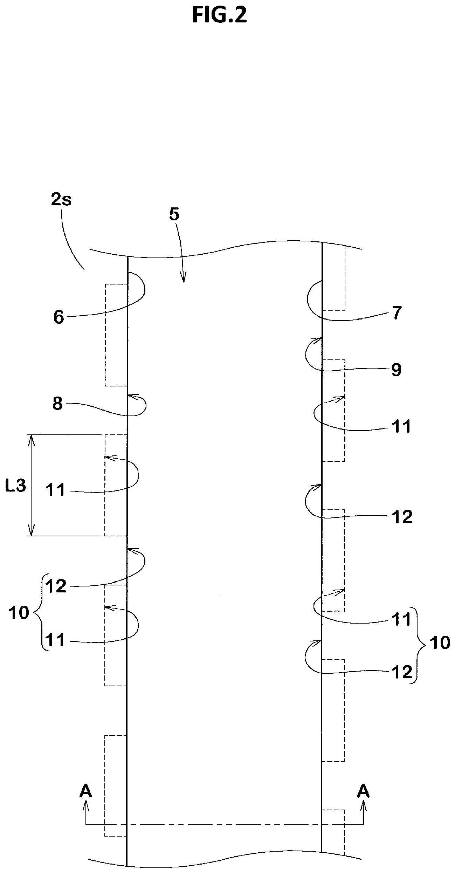

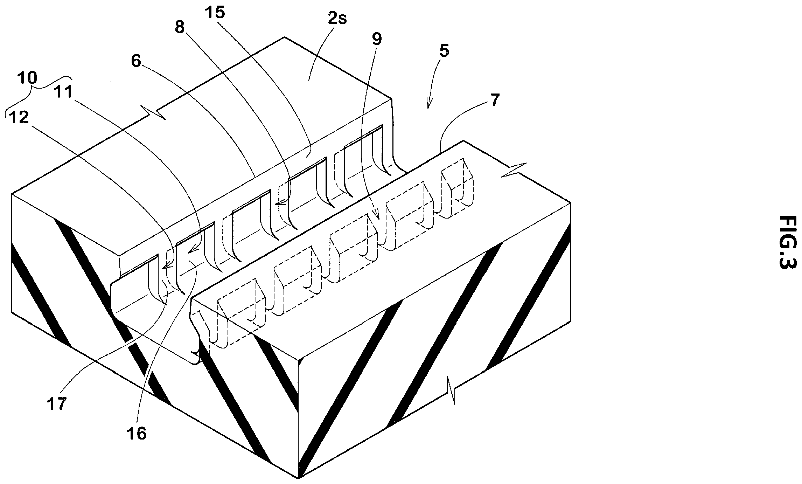

FIG. 2 shows an enlarged plan view of the circumferential groove 5. FIG. 3 shows an enlarged perspective view of the circumferential groove 5. As shown in FIG. 2 and FIG. 3, the circumferential groove 5 extends, for example, in a straight manner along the tire circumferential direction. The present invention is not limited to such a mode, and the circumferential groove 5 may extend, for example, in a zigzag manner in the tire circumferential direction.

The circumferential groove 5 includes a first groove edge 6 and a second groove edge 7 extending on the tread surface 2s, a first groove wall 8 extending inwardly in the tire radial direction from the first groove edge 6, and a second groove wall 9 extending inwardly in the tire radial direction from the second groove edge 7.

As shown in FIG. 3, the first groove wall 8 includes a recess-projection wall portion 10 in which recesses and projections are repeated in the tire circumferential direction on the inner side in the tire radial direction with respect to the first groove edge 6. In other words, the recess-projection wall portion 10 is separated from the first groove edge 6 in the tire radial direction. In addition, the recess-projection wall portion 10 includes a plurality of recesses 11 arranged at intervals in the tire circumferential direction, and columnar portions 12 formed between the adjacent recesses 11. The same applies to the second groove wall 9. In FIG. 2, each recess provided on each groove wall is shown by a broken line.

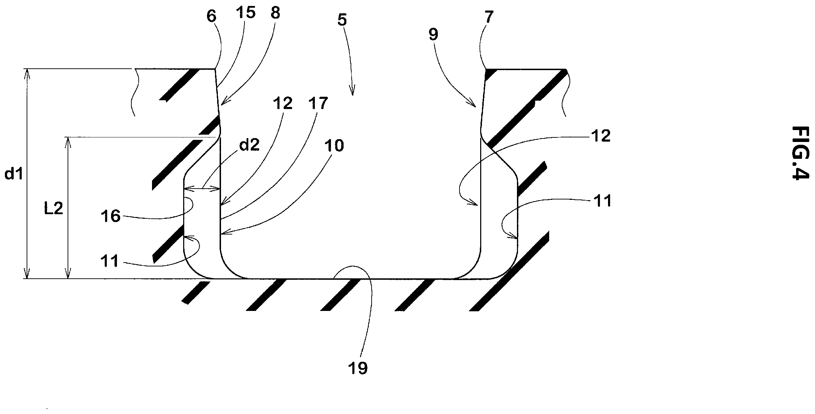

FIG. 4 shows a cross-sectional view taken along a line A-A in FIG. 2. As shown in FIG. 3 and FIG. 4, each recess 11 includes a first plane 16 which is flat at a bottom thereof. Each columnar portion 12 includes a second plane 17 substantially parallel to the first plane 16. The fact that the first plane 16 and the second plane 17 are substantially parallel to each other means that a normal error included in a rubber molded product is allowed, and a mode in which the angle difference between the first plane 16 and the second plane 17 is not greater than 5° is included. In a more preferable mode, the first plane 16 and the second plane 17 are provided completely parallel to each other.

As a result of adopting the above configuration, the tire 1 according to the present invention can exert sufficiently large frictional force during running on a wet road surface by the groove edges of the circumferential grooves 5 even when the tread portion 2 is worn, and further can reliably suppress a decrease in wet performance due to wear of the tread portion 2. As for the reason for this, the following mechanism is inferred.

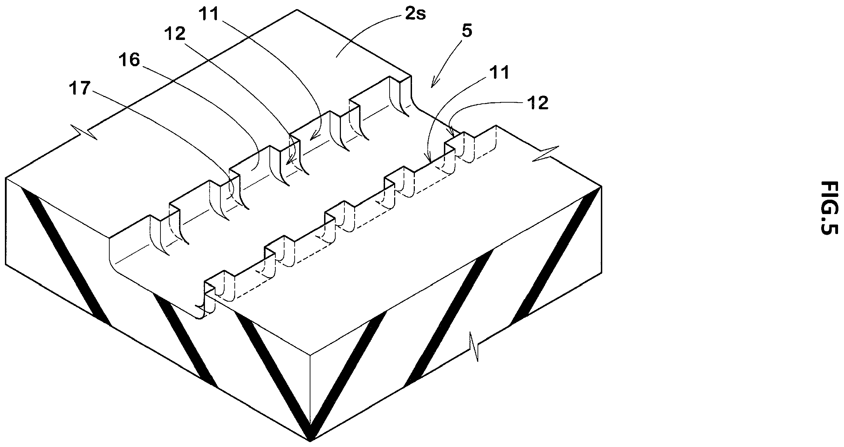

FIG. 5 shows an enlarged perspective view of the circumferential groove 5 when the tread portion 2 is worn. As shown in FIG. 5, when the tread portion 2 is worn such that the recesses 11 and the columnar portions 12 appear on the tread surface 2s, the first planes 16 and the second planes 17 form the groove edges of the circumferential groove 5 and provide frictional force during running on a wet road surface. In addition, in the present invention, since the second planes 17 of the columnar portions 12 and the first planes 16 of the recesses 11 are parallel to each other, the columnar portions 12 are less likely to become deformed, and the groove edges formed by the first planes 16 and the second planes 17 provide large frictional force. It is inferred that, owing to such a mechanism, the tire according to the present invention can exhibit the above effect.

Moreover, the above circumferential groove 5 serves to lose the vibration energy of the air passing through the inside of the circumferential groove 5, by the recesses 11 and the columnar portions 12 during running of the tire, to reduce air column resonance sound, and further to improve noise performance.

Hereinafter, a further detailed configuration of the present embodiment will be described. As shown in FIG. 3 and FIG. 4, the first groove wall 8 of this embodiment extends parallel to a tire normal line passing through the first groove edge 6, or is inclined outwardly in the groove width direction while extending outwardly in the tire radial direction. In addition, the first groove wall 8 includes a planar flat wall portion 15 on the outer side in the tire radial direction of the recess-projection wall portion 10. The tire normal line means a virtual line passing through an arbitrary point and extending parallel to the tire radial direction.

The flat wall portion 15 is provided, for example, at an angle of 0 to 16° relative to the tire normal line passing through the first groove edge 6. The angle of the flat wall portion 15 relative to the tire normal line is preferably 0 to 4°. The first groove wall 8 having such a flat wall portion 15 can exert large frictional force by the first groove edge 6 during running on a wet road surface.

The second plane 17 of each columnar portion 12 is connected to the flat wall portion 15. Each second plane 17 of the present embodiment is provided at the substantially same angle relative to the tire normal line as the flat wall portion 15.

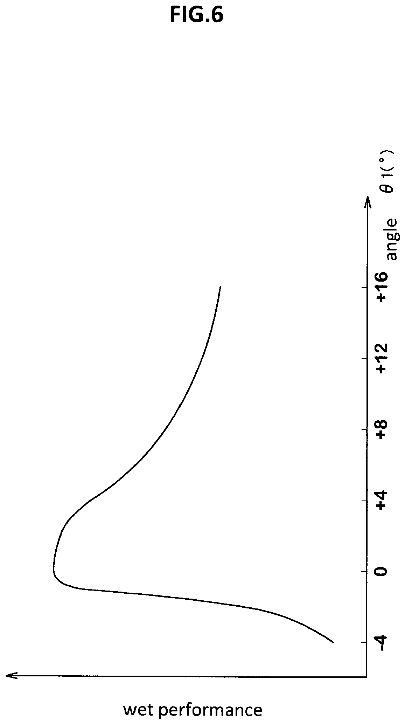

FIG. 6 shows a graph representing the relationship between wet performance and an angle θ1 of the second plane 17 relative to the tire normal line passing through the first groove edge 6, in the tire 1 according to the present embodiment. The wet performance in FIG. 6 is the wet performance in a state where a land portion is worn until the recess-projection wall portion 10 appears at the edge of the groove. In this graph, the horizontal axis indicates the angle θ1, and the vertical axis indicates the wet performance. When the sign of the angle θ1 is (+), it indicates that the second plane 17 is inclined outwardly in the groove width direction while extending outwardly in the tire radial direction. When the sign of the angle θ1 is (-), it indicates that the second plane 17 is inclined inwardly in the groove width direction while extending outwardly in the tire radial direction.

As described above, the tire 1 according to the present embodiment can be expected to have excellent wet performance in a state where the columnar portions 12 appear as a groove edge. Meanwhile, in order to ensure the stiffness of the columnar portions 12 and the groove volume of the circumferential groove 5 in a well-balanced manner, the angle θ1 is preferably defined in an appropriate range. As shown in FIG. 6, the angle θ1 is preferably 0 to 16°, and in particular, the angle θ1 is more preferably 0 to 4°. Accordingly, excellent wet performance can be expected even in a state where the circumferential groove 5 is worn.

On the other hand, when the angle θ1 is smaller than 0° (that is, when the sign of the angle θ1 is (-)), the wet performance sharply decreases. The reason for this can be inferred to be that, when the second plane 17 is inclined inwardly in the groove width direction while extending outwardly in the tire radial direction, the first groove wall 8 is likely to fall down inwardly in the groove width direction and further the frictional force exerted by the first groove edge 6 is decreased.

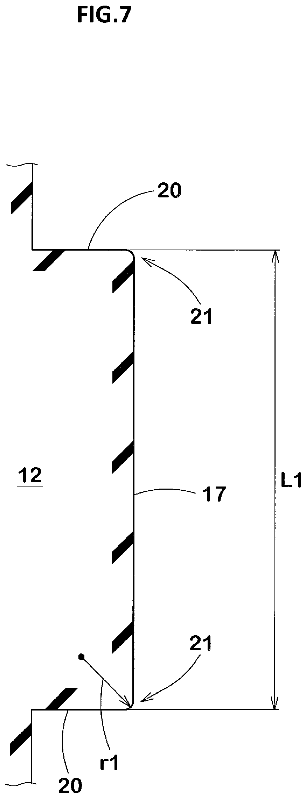

FIG. 7 shows the contour of a cross-section of the columnar portion 12 along the tread surface 2s. As shown in FIG. 7, a maximum length L1 in the tire circumferential direction of each columnar portion 12 is, for example, 5 to 11 mm. Accordingly, the stiffness of the columnar portion 12 can be increased while ensuring a large volume of the recess 11.

Each columnar portion 12 includes side surfaces 20 connected to both sides in the tire circumferential direction of the second plane 17. Each side surface 20 of the columnar portion 12 is formed so as to be flat. In addition, each side surface 20 of the columnar portion 12 extends in the groove width direction of the circumferential groove 5 in a tread plan view. An angle of each side surface 20 relative to the groove width direction is, for example, preferably not greater than 5°. In a more preferable mode, each side surface 20 of the present embodiment extends parallel to the groove width direction of the circumferential groove 5. That is, in the present embodiment, the angle is set to 0°. Such a side surface 20 can enhance traction performance when appearing as an edge on the tread surface 2s.

In the present embodiment, a corner portion 21 between the second plane 17 and each side surface 20 of each columnar portion 12 has a radius of curvature r1 of 0.5 mm or less. Such a columnar portion 12 serves to suppress uneven wear of the corner portion 21.

In a further preferable mode, the length in the groove width direction of each side surface 20 at the same position in the tire radial direction as the outer surface of a wear indicator projection (not shown) provided on the circumferential groove 5 is preferably not less than 90% of the maximum length in the groove width direction of the side surface 20. Accordingly, wet performance after wear is reliably maintained. The wear indicator projection indicates the wear limit of the tire. Generally, the height of the projection is set to 1.6 mm.

As shown in FIG. 2, the recesses 11 having the same shape are provided on the first groove wall 8 of the circumferential groove 5 of the present embodiment at equal intervals in the groove longitudinal direction. However, the present invention is not limited to such a mode, and, for example, a plurality of recesses 11 having different shapes may be arranged in the groove longitudinal direction.

As shown in FIG. 4, the first plane 16 of each recess 11 of the present embodiment is connected to a groove bottom surface 19 of the circumferential groove 5. Accordingly, wet performance can be ensured by the recess 11 even at the end stage of wear in which the wear indicator projection becomes exposed.

A maximum length L2 in the tire radial direction of each recess 11 is preferably not less than 40%, more preferably not less than 50%, and further preferably not less than 60% of a maximum depth d1 of the circumferential groove 5, and is preferably not greater than 90%, more preferably not greater than 80%, and further preferably not greater than 70% of the maximum depth d1. Such a recess 11 can reliably suppress a decrease in wet performance due to wear of the tread portion 2 while maintaining steering stability on a dry road surface when the tire is new.

From the same viewpoint, a depth d2 of each recess 11 is, for example, not greater than 5 mm, and preferably 1 to 3 mm. The depth d2 of the recess 11 corresponds to the distance, in a normal direction orthogonal to the first plane 16, from the first plane 16 to the second plane 17.

The length in the tire radial direction of a region where the first plane 16 and the second plane 17 are parallel to each other is preferably not less than 40% and more preferably 50% to 70% of the maximum length L2 in the tire radial direction of the recess 11. Accordingly, the above effect is reliably achieved.

As shown in FIG. 2, a maximum length L3 in the tire circumferential direction of each recess 11 is preferably not less than 4 mm, more preferably not less than 5 mm, and further preferably not less than 6 mm, and is preferably not greater than 12 mm, more preferably not greater than 11 mm, and further preferably not greater than 10 mm. In addition, the length L3 of the recess 11 is preferably larger than the length L1 of the columnar portion 12. Such a recess 11 can reliably reduce air column resonance sound while exhibiting the above effect.

As shown in FIG. 3, the second groove wall 9 of the circumferential groove 5 has the same configuration as the first groove wall 8. Thus, the configuration of the above first groove wall 8 can be applied to the configuration of the second groove wall 9.

As shown in FIG. 2, the second groove wall 9 includes a recess-projection wall portion 10 in which recesses and projections are repeated in the tire circumferential direction in a phase different from that of the recess-projection wall portion 10 of the first groove wall 8 on the inner side in the tire radial direction with respect to the second groove edge 7. Accordingly, the vibration energy of the air in the circumferential groove 5 is more likely to be lost, so that noise performance is further improved.

As shown in FIG. 2, preferably, no lateral groove and no sipe that are open on the tread surface of the tread portion 2 communicate with each circumferential groove 5 of the present embodiment. Accordingly, the stiffness of the tread portion 2 is improved, and steering stability on a dry road surface is ensured.

### EXAMPLES

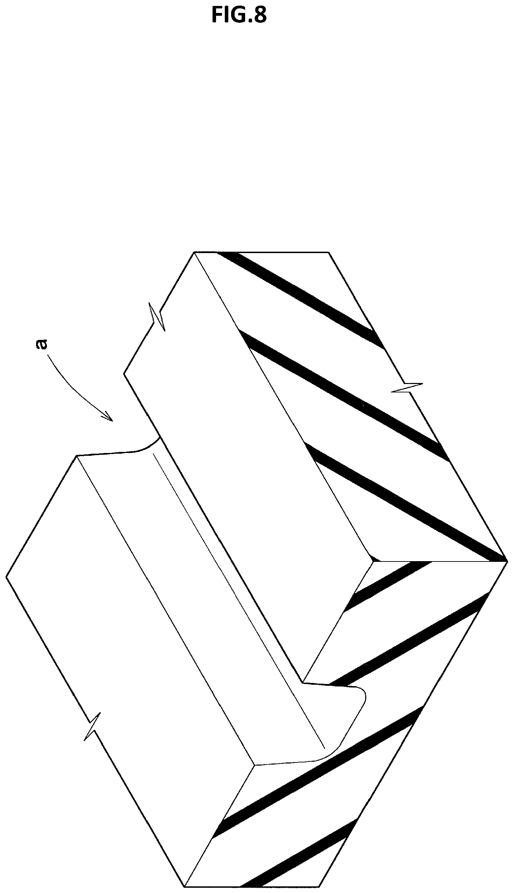

Pneumatic tires with a size of 245/40R18 having circumferential grooves as described above were produced as test tires on the basis of specifications in Table 1. As a comparative example, a pneumatic tire having a conventional circumferential groove a having no recess as shown in FIG. 8 was produced as a test tire. Each test tire has substantially the same configuration except for the above configuration. In addition, each test tire has substantially the same wet performance in a new state. Each test tire was tested for wet performance after wear and noise performance. The common specifications and the test methods for the respective test tires are as follows.
Mount rim: 18×8.5J
Tire internal pressure: 250 kPa for front wheels, 250 kPa for rear wheels
Test vehicle: four-wheel-drive vehicle having an engine displacement of 3500 cc
Tire mounted position: all wheels

### <Wet Performance after Wear>

For each test tire, the tread portion was worn such that the tire was brought into a state where the remaining groove depth of the circumferential groove was 40% of the total depth of the circumferential groove when the tire was new. Sensory evaluation was made by a driver for wet performance when the above test vehicle on which each test tire in this state was mounted ran on a wet road surface. The results are shown as scores with the wet performance of the comparative example being regarded as 100. A higher value indicates that the wet performance after wear is better.

### <Noise Performance>

The air column resonance sounds of the circumferential grooves were measured when the above test vehicle on which new test tires were mounted ran on a dry road surface at a speed of 100 km/h. The results are shown in decibels relative to the comparative example.

The test results are shown in Table 1.

**[Table 1]**

| | Comparative Example | Example 1 | Example 2 | Example 3 |
|---|---|---|---|---|
| Drawing showing shape of circumferential groove | FIG. 8 | FIG. 3 | FIG. 3 | FIG. 3 |
| Maximum length L2 in tire radial direction of recess / maximum depth d1 of circumferential groove (%) | - | 70 | 70 | 70 |
| Depth d2 of recess (mm) | - | 1.5 | 1.0 | 3.0 |
| Wet performance after wear (score) | 100 | 108 | 103 | 110 |
| Noise performance (db) | Reference | -0.3 | -0.3 | -0.5 |

As shown in Table 1, it is confirmed that the tire of each Example exhibits excellent wet performance even in a state where the tread portion is worn. That is, it is confirmed that the tire of each Example reliably suppresses a decrease in wet performance due to wear of the tread portion.

Moreover, it is also confirmed that the tire of each Example has small air column resonance sound of the circumferential groove and exhibits excellent noise performance.

## Claims

1. A tire (1) comprising a tread portion (2), wherein
the tread portion (2) has at least one circumferential groove (5) continuously extending in a tire circumferential direction,
the circumferential groove (5) includes a first groove edge (6) extending on a tread surface (2s), a first groove wall (8) extending inwardly in a tire radial direction from the first groove edge (6), a second groove edge (7) extending on the tread surface (2s), and a second groove wall (9) extending inwardly in the tire radial direction from the second groove edge (7),
the first groove wall (8) includes a recess-projection wall portion (10) in which recesses and projections are repeated in the tire circumferential direction on an inner side in the tire radial direction with respect to the first groove edge (6),
the recess-projection wall portion (10) includes a plurality of recesses (11) arranged at equal intervals in the tire circumferential direction, and columnar portions (12) formed between the adjacent recesses (11),
each recess (11) includes a first plane (16) which is flat at a bottom thereof, and
each columnar portion (12) includes a second plane (17) substantially parallel to the first plane (16),
**characterized in that** the second groove wall (9) includes a recess-projection wall portion (10) in which recesses arranged at the same equal intervals and projections are repeated in the tire circumferential direction on the inner side in the tire radial direction with respect to the second groove edge (7) in a phase different from that of the recess-projection wall portion (10) of the first groove wall (8).

2. The tire (1) according to claim 1, wherein the first groove wall (8) includes a flat wall portion (15) having an angle of 0 to 16° relative to a tire normal line passing through the first groove edge (6), on an outer side in the tire radial direction of the recess-projection wall portion (10).

3. The tire (1) according to claim 1 or 2, wherein the first plane (16) of each recess (11) is connected to a groove bottom surface (19) of the circumferential groove (5).

4. The tire (1) according to any one of claims 1 to 3, wherein a maximum length (L2) in the tire radial direction of each recess (11) is 50% to 70% of a maximum depth (d1) of the circumferential groove (5).

5. The tire (1) according to any one of claims 1 to 4, wherein a maximum length (L3) in the tire circumferential direction of each recess (11) is 4 to 12 mm.

6. The tire (1) according to any one of claims 1 to 5, wherein a depth (d2) of each recess (11) is 1 to 3 mm.

7. The tire (1) according to any one of claims 1 to 6, wherein a maximum length (L1) in the tire circumferential direction of each columnar portion (12) is 5 to 11 mm.

8. The tire (1) according to any one of claims 1 to 7, wherein
each columnar portion (12) includes side surfaces (20) connected to both sides in the tire circumferential direction of the second plane (17), and
each side surface (20) has a flat shape extending parallel to a groove width direction of the circumferential groove (5).

9. The tire (1) according to claim 8, wherein a corner portion (21) between the second plane (17) and each side surface (20) of the columnar portion (12) has a radius of curvature (r1) of 0.5 mm or less.

10. The tire (1) according to any one of claims 1 to 9, wherein no lateral groove and no sipe that are open on the tread surface (2s) of the tread portion (2) communicate with the circumferential groove (5).

## Patentansprüche

1. Reifen (1) mit einem Laufflächenabschnitt (2), wobei
der Laufflächenabschnitt (2) mindestens eine Umfangsrille (5) aufweist, die sich kontinuierlich in einer Reifenumfangsrichtung erstreckt,
die Umfangsrille (5) eine erste Rillenkante (6), die sich an einer Laufflächenoberfläche (2s) erstreckt, eine erste Rillenwand (8), die sich von der ersten Rillenkante (6) in einer Reifenradialrichtung nach innen erstreckt, eine zweite Rillenkante (7), die sich an der Laufflächenoberfläche (2s) erstreckt, und eine zweite Rillenwand (9), die sich von der zweiten Rillenkante (7) in der Reifenradialrichtung nach innen erstreckt, aufweist,
die erste Rillenwand (8) einen Aussparung-Vorsprung-Wandabschnitt (10) umfasst, in dem sich Aussparungen und Vorsprünge in der Reifenumfangsrichtung an einer Innenseite in der Reifenradialrichtung in Bezug auf die erste Rillenkante (6) wiederholen,
der Aussparung-Vorsprung-Wandabschnitt (10) eine Vielzahl von Aussparungen (11), die in gleichen Abständen in der Reifenumfangsrichtung angeordnet sind, und säulenförmige Abschnitte (12), die zwischen den benachbarten Aussparungen (11) ausgebildet sind, umfasst,
jede Aussparung (11) eine erste Ebene (16) umfasst, die an ihrem Grund flach ist, und
jeder säulenförmige Abschnitt (12) eine zweite Ebene (17) umfasst, die im Wesentlichen parallel zu der ersten Ebene (16) verläuft,
**dadurch gekennzeichnet, dass** die zweite Rillenwand (9) einen Aussparung-Vorsprung-Wandabschnitt (10) umfasst, in dem sich Aussparungen, die in denselben gleichen Abständen angeordnet sind, und Vorsprünge in der Reifenumfangsrichtung an der Innenseite in der Reifenradialrichtung in Bezug auf die zweite Rillenkante (7) in einer Phase wiederholen, die sich von derjenigen des Aussparung-Vorsprung-Wandabschnitts (10) der ersten Rillenwand (8) unterscheidet.

2. Reifen (1) nach Anspruch 1, wobei die erste Rillenwand (8) einen flachen Wandabschnitt (15) mit einem Winkel von 0 bis 16° relativ zu einer Reifennormallinie, die durch die erste Rillenkante (6) verläuft, an einer Außenseite in der Reifenradialrichtung des Aussparung-Vorsprung-Wandabschnitts (10) umfasst.

3. Reifen (1) nach Anspruch 1 oder 2, wobei die erste Ebene (16) jeder Aussparung (11) mit einer Rillengrundfläche (19) der Umfangsrille (5) verbunden ist.

4. Reifen (1) nach einem der Ansprüche 1 bis 3, wobei die maximale Länge (L2) jeder Aussparung (11) in der Reifenradialrichtung 50% bis 70% einer maximalen Tiefe (d1) der Umfangsrille (5) beträgt.

5. Reifen (1) nach einem der Ansprüche 1 bis 4, wobei eine maximale Länge (L3) in der Reifenumfangsrichtung jeder Aussparung (11) 4 bis 12 mm beträgt.

6. Reifen (1) nach einem der Ansprüche 1 bis 5, wobei eine Tiefe (d2) jeder Aussparung (11) 1 bis 3 mm beträgt.

7. Reifen (1) nach einem der Ansprüche 1 bis 6, wobei die maximale Länge (L1) jedes säulenförmigen Abschnitts (12) in der Reifenumfangsrichtung 5 bis 11 mm beträgt.

8. Reifen (1) nach einem der Ansprüche 1 bis 7, wobei
jeder säulenförmige Abschnitt (12) Seitenflächen (20) umfasst, die mit beiden Seiten in der Reifenumfangsrichtung der zweiten Ebene (17) verbunden sind, und
jede Seitenfläche (20) eine flache Form aufweist, die sich parallel zu einer Rillenbreitenrichtung der Umfangsrille (5) erstreckt.

9. Reifen (1) nach Anspruch 8, wobei ein Eckenabschnitt (21) zwischen der zweiten Ebene (17) und jeder Seitenfläche (20) des säulenförmigen Abschnitts (12) einen Krümmungsradius (r1) von 0,5 mm oder weniger aufweist.

10. Reifen (1) nach einem der Ansprüche 1 bis 9, wobei keine Seitenrille und kein Feinschnitt, die an der Laufflächenoberfläche (2s) des Laufflächenabschnitts (2) offen sind, mit der Umfangsrille (5) in Verbindung steht.

## Revendications

1. Pneumatique (1) comprenant une portion formant bande de roulement (2), dans lequel
la portion formant bande de roulement (2) a au moins une rainure circonférentielle (5) s'étendant en continu dans une direction circonférentielle du pneumatique,
la rainure circonférentielle (5) inclut un premier bord de rainure (6) s'étendant sur une surface de bande de roulement (2s), une première paroi de rainure (8) s'étendant vers l'intérieur dans une direction radiale du pneumatique depuis le premier bord de rainure (6), un second bord de rainure (7) s'étendant sur la surface de bande de roulement (2s), et une seconde paroi de rainure (9) s'étendant vers l'intérieur dans la direction radiale du pneumatique depuis le second bord de rainure (7),
la première paroi de rainure (8) inclut une portion de paroi d'évidementsprojections (10) dans laquelle des évidements et des projections sont répétées dans la direction circonférentielle du pneumatique sur un côté intérieur dans la direction radiale du pneumatique par rapport au premier bord de rainure (6),
la portion de paroi d'évidements-projections (10) inclut une pluralité d'évidements (11) agencés à intervalles égaux dans la direction circonférentielle du pneumatique, et des portions en colonne (12) formées entre les évidements adjacents (11),
chaque évidement (11) inclut un premier plan (16) qui est plat au niveau d'un fond de celui-ci, et
chaque portion en colonne (12) inclut un second plan (17) sensiblement parallèle au premier plan (16),
**caractérisé en ce que** la seconde paroi de rainure (9) inclut une portion de paroi d'évidements-projections (10) dans laquelle des évidements agencés aux mêmes intervalles égaux et des projections sont répétées dans la direction circonférentielle du pneumatique sur le côté intérieur dans la direction radiale du pneumatique par rapport au second bord de rainure (7) dans une phase différente de celle de la portion de paroi d'évidementsprojections (10) de la première paroi de rainure (8).

2. Pneumatique (1) selon la revendication 1, dans lequel la première paroi de rainure (8) inclut une portion de paroi plate (15) ayant un angle de 0 à 16° relativement à une ligne normale de pneumatique passant à travers le premier bord de rainure (6), sur un côté extérieur dans la direction radiale du pneumatique de la portion de paroi d'évidements-projections (10).

3. Pneumatique (1) selon la revendication 1 ou 2, dans lequel le premier plan (16) de chaque évidement (11) est connecté à une surface de fond de rainure (19) de la rainure circonférentielle (5).

4. Pneumatique (1) selon l'une quelconque des revendications 1 à 3, dans lequel une longueur maximum (L2) dans la direction radiale du pneumatique de chaque évidement (11) est de 50 % à 70 % d'une profondeur maximum (d1) de la rainure circonférentielle (5).

5. Pneumatique (1) selon l'une quelconque des revendications 1 à 4, dans lequel une longueur maximum (L3) dans la direction circonférentielle du pneumatique de chaque évidement (11) est de 4 à 12 mm.

6. Pneumatique (1) selon l'une quelconque des revendications 1 à 5, dans lequel une profondeur (d2) de chaque évidement (11) est de 1 à 3 mm.

7. Pneumatique (1) selon l'une quelconque des revendications 1 à 6, dans lequel une longueur maximum (L1) dans la direction circonférentielle du pneumatique de chaque portion en colonne (12) est de 5 à 11 mm.

8. Pneumatique (1) selon l'une quelconque des revendications 1 à 7, dans lequel
chaque portion en colonne (12) inclut des surfaces latérales (20) connectées aux deux côtés dans la direction circonférentielle du pneumatique du second plan (17), et
chaque surface latérale (20) a une forme plate s'étendant parallèlement à une direction de largeur de rainure de la rainure circonférentielle (5).

9. Pneumatique (1) selon la revendication 8, dans lequel une portion en coin (21) entre le second plan (17) et chaque surface latérale (20) de la portion en colonne (12) a un rayon de courbure (r1) de 0,5 mm ou moins.

10. Pneumatique (1) selon l'une quelconque des revendications 1 à 9, dans lequel aucune rainure latérale et aucune fente qui sont ouvertes sur la surface de bande de roulement (2s) de la portion formant bande de roulement (2) ne communiquent avec la rainure circonférentielle (5).
